# EUROPÄISCHE PATENTSCHRIFT

(11) **EP 4 483 070 B1**
(45) Veröffentlichungstag und Bekanntmachung des Hinweises auf die Patenterteilung: **29.07.2026**
(21) Anmeldenummer: 23705940.7
(22) Anmeldetag: 27.01.2023
(51) Int. Cl.: F16D 65/18

(54) **MEHRKOLBENAUSRÜCKSYSTEM FÜR EINE BREMSVORRICHTUNG EINES FAHRZEUGS UND BREMSVORRICHTUNG FÜR EINE GETRIEBEANORDNUNG EINES FAHRZEUGS MIT DEM MEHRKOLBENAUSRÜCKSYSTEM**
MULTI-PISTON DISENGAGEMENT SYSTEM FOR A BRAKING DEVICE OF A MOTOR VEHICLE AND BRAKING DEVICE FOR A TRANSMISSION ASSEMBLY OF A MOTOR VEHICLE WITH THE MULTI-PISTON DISENGAGEMENT SYSTEM
SYSTÈME DE DÉBRAYAGE À PLUSIEURS PISTONS DE DISPOSITIF DE FREINAGE D'UN VÉHICULE AUTOMOBILE ET DISPOSITIF DE FREINAGE D'ENSEMBLE DE TRANSMISSION D'UN VÉHICULE AUTOMOBILE PAR LE SYSTÈME DE DÉBRAYAGE À PISTONS MULTIPLES

(30) Priorität: 25.02.2022 DE 102022104555
(43) Veröffentlichungstag der Anmeldung: 01.01.2025
(73) Patentinhaber: Schaeffler Technologies AG & Co. KG, 91074 Herzogenaurach (DE)
(72) Erfinder: ORTMANN, Simon, 76532 Baden-Baden (DE); SEITER, Claudia, 77830 Bühlertal (DE)
(74) Vertreter: Schaeffler Technologies
(86) Internationale Anmeldenummer: PCT/DE2023/100061
(87) Internationale Veröffentlichungsnummer: WO 2023/160745

(56) Entgegenhaltungen:
- WO-A2-2008/028639
- DE-A1- 102019 125 767
- DE-A1- 102019 129 137
- DE-A1- 102020 117 849
- DE-A1- 102021 108 983

## Beschreibung

Die Erfindung betrifft ein Mehrkolbenausrücksystem für eine Bremsvorrichtung eines Fahrzeugs mit den Merkmalen des Oberbegriffs des Anspruchs 1 und eine Bremsvorrichtung für eine Getriebeanordnung eines Fahrzeugs mit dem Mehrkolbenausrücksystem.

Kolbenausrücksysteme zur Betätigung von Kupplungen oder Bremsen in einem elektrischen Antriebsstrang eines Fahrzeugs sind aus dem Stand der Technik hinreichend bekannt. Beispielsweise beschreibt die Druckschrift DE 10 2020 104 771 A1 einen Nehmerzylinder für ein Ausrücksystem eines Fahrzeugs mit einem Gehäuse, welches einen Druckraum ausbildet und mit einem Kolben, der in dem Druckraum axial beweglich angeordnet ist. Zur Betätigung einer Kupplung kann der Kolben eine Betätigungskraft in die Kupplung einleiten. Aus der DE 10 2017 120 250 A1 ist ein Nehmerzylindersystem zum Ausrücken einer Doppelkupplung bekannt, bei welchem ein zentraler Zylinder von mehreren äußeren Zylindern umgeben ist. Weiterer Stand der Technik ist in der DE 20 2018 104 092 U1 erwähnt.

Aufgabe der Erfindung ist es, ein Ringgehäuse des Mehrkolbenausrücksystems funktional zuverlässig und kostengünstig herstellbar auszubilden. Diese Aufgabe wird durch ein Mehrkolbenausrücksystem für eine Bremsanordnung eines Fahrzeugs mit den Merkmalen des Anspruchs 1 und durch eine Bremsvorrichtung für eine Getriebeanordnung eines Fahrzeugs mit dem Mehrkolbenausrücksystem mit den Merkmalen des Anspruchs 9 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Mehrkolbenausrücksystem, welches zur Betätigung einer Bremseinrichtung ausgebildet ist, wobei die Bremseinrichtung ein Bestandteil einer Bremsvorrichtung für eine Getriebeanordnung eines Fahrzeugs ist. Zum Beispiel ist die Bremseinrichtung eine nasslaufende Lamellenbetriebsbremse, welche innerhalb eines Nassraums eines Elektrofahrzeugs oder Hybridfahrzeugs anordbar oder angeordnet ist. Das Fahrzeug ist vorzugsweise ein Elektrofahrzeug, insbesondere ein elektrisch oder hybrid angetriebener PKW oder Nutzfahrzeug.

Das Mehrkolbenausrücksystem umfasst ein Ringgehäuse. Das Ringgehäuse weist eine Hauptachse auf, das eine axiale Richtung definiert. Das Ringgehäuse ist insbesondere koaxial und/oder konzentrisch zu der Hauptachse angeordnet.

Das Ringgehäuse umfasst mehrere Gehäuseabschnitte und mehrere mit einem Fluid, insbesondere einer Hydraulikflüssigkeit, befüllbare und/oder befüllte Druckräume. In jedem Gehäuseabschnitt ist ein Druckraum angeordnet, insbesondere in den Gehäuseabschnitt integriert und/oder in diesem ausgeformt.

Das Ringgehäuse weist einen, bevorzugt genau einen, Strömungskanal auf. Die Druckräume sind mittels des Strömungskanals untereinander strömungstechnisch verbunden. Vorzugsweise umfasst das Ringgehäuse einen Fluideinlass, durch den das Fluid, in den Strömungskanal eingeleitet werden kann und von diesem aus in die Druckräume strömen kann.

Das Mehrkolbenausrücksystem umfasst mehrere hydraulische Betätigungsanordnungen mit mehreren Kolbenbaugruppen. Beispielsweise umfasst das Mehrkolbenausrücksystem vier, sechs oder acht Betätigungsanordnungen und/oder Kolbenbaugruppen. Insbesondere sind die Betätigungsanordnungen in Umlaufrichtung um das Ringgehäuse in regelmäßigen Abständen beabstandet voneinander angeordnet. Vorteilhaft ist, dass das Ringgehäuse und die daraus resultierend ringförmig angeordneten Mehrkolbenausrücksysteme bauraumsparend in der Bremsanordnung integriert werden können.

Jeder Betätigungsanordnung ist ein Gehäuseabschnitt des Ringgehäuses zugeordnet. Jede Betätigungsanordnung umfasst eine Kolbenbaugruppe mit einem Kolben. Der Kolben ist in dem Druckraum axial beweglich angeordnet. Bei einer hydraulischen Druckbeaufschlagung kann der Kolben einen Betätigungshub zur Einleitung einer Betätigungskraft in die Bremseinrichtung ausführen. Insbesondere leitet der Kolben bei und/oder nach der Ausführung des Betätigungshubs eine Druckkraft als Betätigungskraft in ein Lamellenpaket der Bremseinrichtung ein, wobei das Lamellenpaket eine Vielzahl an Reiblamellen umfasst. Durch die Betätigungskraft werden die Reiblamellen zur Erzeugung einer Bremskraft reibschlüssig aneinandergepresst.

Vorzugsweise umfasst jede Betätigungsanordnung eine Federbaugruppe, welche eine Rückstelleinrichtung umfasst. Vorzugsweise ist die Rückstelleinrichtung dazu ausgebildet, den Kolben in eine axiale Gegenrichtung zurückzustellen. Insbesondere führt der Kolben einen Rückhub aus, wenn er mittels der Rückstelleinrichtung zurückgestellt wird.

Erfindungsgemäß ist das Ringgehäuse in der axialen Richtung zweiteilig ausgebildet. Es umfasst als einen ersten Teil ein Hauptgehäuse und als einen zweiten Teil einen Gehäusedeckel. Vorzugsweise sind das Hauptgehäuse und der Gehäusedeckel ringförmig und/oder als ein geschlossener Ring ausgebildet. Insbesondere können das Hauptgehäuse und der Gehäusedecke axial aufeinander und/oder hintereinander angeordnet, insbesondere zusammengesetzt, werden.

In einer bevorzugten Ausführungsform der Erfindung umfasst das Hauptgehäuse den Strömungskanal. Bevorzugt ist der Strömungskanal in oder an dem Hauptgehäuse angeordnet, insbesondere in das Hauptgehäuse z.B. durch spanende Bearbeitung eingebracht. Optional ergänzend umfasst das Hauptgehäuse die Gehäuseabschnitte. Vorzugsweise sind die Gehäuseabschnitte in oder an dem Hauptgehäuse angeordnet, insbesondere sind die Gehäuseabschnitte durch das Hauptgehäuse gebildet, im Speziellen einteilig und/oder einmaterialig in diesem integriert.

Eine weitere bevorzugte Ausführungsform der Erfindung sieht vor, dass der Strömungskanal in einer Trennebene des Hauptgehäuses und des Gehäusedeckels, angeordnet ist. Die Anordnung des Strömungskanals in der Trennebene hat den Vorteil, dass diese leicht zugänglich ist und dass dadurch der Strömungskanal kostengünstig in das Hauptgehäuse eingebracht, insbesondere gefertigt werden kann. Insbesondere kann eine aufwändige und kostenintensive Herstellung des Strömungskanals mittels Radialbohrungen, die in ein einteiliges Ringgehäuse eingebracht sind und die zur Abdichtung endseitig mittels Verschlusselementen verschlossen sind, vermieden werden.

Gemäß der Erfindung ist der Strömungskanal ringförmig und/oder als ein umlaufender, geschlossener Ring ausgebildet. Dabei ist der Strömungskanal konzentrisch und/oder koaxial zu der Hauptachse angeordnet. Die ringförmige Ausbildung des Strömungskanals hat den Vorteil, dass dieser nicht mittels den Verschlusselementen verschlossen werden muss.

Eine weiter mögliche konstruktive Umsetzung der Erfindung sieht mehrere Axialbohrungen vor, die in dem Hauptgehäuse angeordnet sind, insbesondere in dieses eingebracht sind. Vorzugsweise verbinden die Axialbohrungen den Strömungskanal strömungstechnisch mit den Druckräumen in den Gehäuseabschnitten des Hauptgehäuses. Insbesondere verläuft jeweils zumindest eine Axialbohrung zwischen dem Strömungskanal und einem der Druckräume. Im Speziellen sind die Axialbohrungen durch den Strömungskanal durchgebohrt und münden in den Druckräumen.

In einer bevorzugten Realisierung der Erfindung weist das Mehrkolbenausrücksystem mindestens eine Kanalabdichtung auf, welche zur Abdichtung des Strömungskanals ausgebildet und/oder angeordnet ist. Optional ist die mindestens eine Kanalabdichtung in oder an dem Hauptgehäuse angeordnet. Alternativ ist die mindestens eine Kanalabdichtung an dem Gehäusedeckel angeordnet. Beispielsweise ist die mindestens eine Kanalabdichtung als mindestens ein O-Ring, bevorzugt als ein erster und ein zweiter O-Ring, ausgebildet. Möglich ist dagegen auch, dass die mindestens eine Kanalabdichtung zwischen dem Hauptgehäuse und dem Gehäusedeckel angeordnet ist. In dieser Anordnung ist die mindestens eine Kanalabdichtung vorzugsweise als ein z.B. ringförmiges Dichtungsblech ausgebildet.

Eine weitere bevorzugte Realisierung der Erfindung sieht vor, dass der Gehäusedeckel mindestens eine Ringnut für den mindestens einen O-Ring, bevorzugt eine innere Ringnut und eine äußere Ringnut für den ersten und zweiten O-Ring, aufweist. Alternativ kann das Hauptgehäuse die mindestens eine Ringnut, insbesondere die innere Ringnut und die äußere Ringnut, aufweisen. Dies hat den Vorteil, dass der Gehäusedeckel nicht bearbeitet werden muss, um die mindestens eine Ringnut einzubringen. Der Gehäusedeckel kann dadurch z.B. als ein kostengünstiger Blechzuschnitt ausgebildet sein. Besonders bevorzugt ist es, dass der mindestens eine O-Ring in der mindestens einen Dichtungsnut angeordnet ist.

Beispielsweise ist die mindestens eine Ringnut zu der Hauptachse und/oder zu dem ringförmigen Strömungskanal konzentrisch und/oder koaxial angeordnet. Vorzugsweise verläuft die äußere Ringnut radial außerhalb des Strömungskanals, wobei diese den Strömungskanal radial umgibt. Bevorzugt verläuft die innere Ringnut radial innerhalb des Strömungskanals, wobei dieser die innere Ringnut radial umgibt.

Wenn die mindestens eine Kanalabdichtung als das mindestens eine Dichtungsblech ausgebildet ist, ist dieses bevorzugt in der Trennebene, insbesondere zwischen dem Hauptgehäuse und dem Gehäusedeckel, angeordnet. In der Ausbildung als das ringförmige Dichtungsblech ist dieses bevorzugt koaxial und/oder konzentrisch zu der Hauptachse und/oder zu dem Hauptgehäuse und/oder zu dem Gehäusedeckel angeordnet.

In einer weiteren bevorzugten Ausgestaltung der Erfindung sind das Hauptgehäuse und der Gehäusedeckel form- und/oder kraftschlüssig miteinander verbunden. Beispielsweise sind das Hauptgehäuse und der Gehäusedeckel miteinander verschraubt. Dadurch kann die mindestens eine Kanalabdichtung formschlüssig gesichert sein. Des Weiteren kann dadurch der hydraulische Druck in den Druckräumen gebildet und aufrechterhalten werden.

In einer bevorzugten Ausführungsform der Erfindung umfasst jede Betätigungsanordnung eine Halteplatte. Vorzugsweise ist die Halteplatte in axialer Richtung auf den Gehäuseabschnitt der jeweiligen Betätigungsanordnung aufgesetzt. Insbesondere ist die Halteplatte kraft- und/oder formschlüssig mit dem Gehäuseabschnitt verbunden, beispielsweise mit diesem verschraubt.

In einer möglichen konstruktiven Umsetzung der Erfindung umfasst die Federbaugruppe ein Federblech, einen Federteller und eine Spiralfeder. Bevorzugt ist der Federteller form- und/oder kraftschlüssig mit dem Federblech verbunden. Vorzugsweise ist die Spiralfeder zwischen dem Federteller und der Halteplatte angeordnet. Insbesondere stützt sich die Spiralfeder in axialer Richtung an der Halteplatte und in Gegenrichtung an dem Federteller ab.

In einer weiteren möglichen konstruktiven Umsetzung der Erfindung ist die Federbaugruppe mit der Kolbenbaugruppe wirkverbunden, sodass die Kolbenbaugruppe die Federbaugruppe bei Ausführung des Betätigungshubs und des Rückhubs mitnimmt. Beispielsweise ist der Kolben form- und/oder kraftschlüssig mit dem Federblech verbunden. Vorzugsweise drückt der Kolben gegen das Federblech, wenn er den Betätigungshub ausführt. Dadurch werden das Federblech und der daran befestigte Federteller entgegen der Vorlast der Spiralfeder in die axiale Richtung mitgenommen. Wenn die hydraulische Druckbeaufschlagung des Kolbens nachlässt, wird der Kolben durch die Vorlast der Spiralfeder zurückgestellt. Insbesondere dient die Spiralfeder als Rückstelleinrichtung.

Eine mögliche Umsetzung der Erfindung sieht vor, dass das Mehrkolbenausrücksystem eine Kraftverteilungseinrichtung umfasst. Vorzugsweise ist die Kraftverteilungseinrichtung dazu ausgebildet, die in die Bremseinrichtung eingeleitete Betätigungskraft, insbesondere in Umfangrichtung um das Ringgehäuse, zu verteilen.

Es ist eine Überlegung der Erfindung, dass die Reiblamellen des Lamellenpakets bezogen auf deren Fläche möglichst gleichmäßig mit der Betätigungskraft beaufschlagt werden müssen, um sogenannte Hotspots, insbesondere partielle Überlastungen von Belägen und Reibflächen der Reiblamellen und eine damit einhergehende Unterbelastung anderer Stellen, zu vermeiden. Durch die Kraftverteilungseinrichtung kann die Betätigungskraft in vorteilhafter Weise auf mehrere Stellen an den Reiblamellen verteilt und somit die Bildung derartiger Hotspots verhindert werden.

In einer bevorzugten Ausführungsform ist die Kraftverteilungseinrichtung dazu ausgebildet, die Betätigungskraft in mehreren Krafteinleitungsbereichen in die Bremseinrichtung einzuleiten. Vorzugsweise umfasst die Kraftverteilungseinrichtung die Krafteinleitungsbereiche.

In einer weiteren bevorzugten Ausführungsform ist eine Anzahl der Krafteinleitungsbereiche ein Vielfaches, z.B. das Doppelte oder ein Dreifaches, einer Anzahl der Kolben des Mehrkolbenausrücksystems. Beispielsweise ist die Anzahl der Krafteinleitungsbereiche bei der hydraulischen Druckbeaufschlagung der Kolben bis zu einem gewissen Grenzdruck das Doppelte einer Anzahl der vorhandenen Kolben. Insbesondere ist die Anzahl der Krafteinleitungsbereiche das Dreifache der vorhandenen Kolben, wenn die hydraulische Beaufschlagung der Kolben den Grenzdruck überschreitet.

Eine bevorzugte konstruktive Umsetzung der Erfindung sieht vor, dass die Kraftverteilungseinrichtung einen Kraftverteilerring umfasst. Vorzugsweise ist der Kraftverteilerring bezogen auf die Hauptachse koaxial und/oder konzentrisch zu dem Ringgehäuse anordbar und/oder angeordnet. Bevorzugt sind die Krafteinleitungsbereiche an dem Kraftverteilerring, insbesondere an einer in die axiale Richtung zeigenden Oberseite des Kraftverteilerrings angeordnet.

Eine weitere bevorzugte Ausführungsform der Erfindung sieht vor, dass die Kraftverteilungseinrichtung gemeinsam mit den Kolben den Betätigungshub ausführt. Beispielsweise ist die Kraftverteilungseinrichtung hierzu bevorzugt unmittelbar in axialer Richtung vor den Kolben angeordnet. Bevorzugt wird die Kraftverteilungseinrichtung dadurch in eine Kontaktstellung mit der Bremseinrichtung überführt, wenn die Kolben den Betätigungshub ausführen. Insbesondere drücken die Kolben bei dem Vorwärtshub gegen die Kraftverteilungseinrichtung und bewegen diese in die Kontaktstellung. Im Speziellen wird die Betätigungskraft der Kolben mittels der Kraftverteilungseinrichtung in die Bremseinrichtung eingeleitet, wenn die Kraftverteilungseinrichtung in der Kontaktstellung angeordnet ist. Alternativ oder optional ergänzend kann die Kraftverteilungseinrichtung zur Überführung in die Kontaktstellung und zur Übertragung der Betätigungskraft mit den Kolben wirkverbunden sein.

Eine mögliche Realisierung der Erfindung sieht vor, dass jeder Kolbenbaugruppe mehrere Krafteinleitungsbereiche der Kraftverteilungseinrichtung räumlich und funktional zugeordnet sind. Vorzugsweise sind jeder Kolbenbaugruppe drei Krafteinleitungsbereiche zugeordnet. Dies bedeutet insbesondere, dass die Krafteinleitungsbereiche in axialer Richtung vor der jeweils räumlich zugeordneten Kolbenbaugruppe angeordnet sind, sodass sie die Betätigungskraft des jeweiligen Kolbens vervielfachen, insbesondere verdoppeln oder verdreifachen, können.

In einer möglichen konstruktiven Ausgestaltung der Erfindung sind Krafteinleitungsbereiche durch Zähne gebildet. Vorzugsweise sind die Zähne an dem Kraftverteilerring beabstandet voneinander angeordnet. Insbesondere stehen die Zähne von der Oberseite des Kraftverteilerrings in die axiale Richtung ab.

Eine bevorzugte konstruktive Ausgestaltung der Erfindung sieht vor, dass einige Zähne eine erste Höhe aufweisen und die anderen Zähne eine zweite Höhe aufweisen, wobei sich die erste Höhe von der zweiten Höhe unterscheidet. Vorzugsweise ist die erste Höhe größer als die zweite Höhe. Insbesondere sind einige Zähne höher als die anderen Zähne.

In einer möglichen Realisierung der Erfindung sind jeder Kolbenbaugruppe mehrere Zähne räumlich und funktional zugeordnet. Insbesondere sind jeder Kolbenbaugruppe insgesamt drei Zähne räumlich und funktional zugeordnet, wobei davon ein Zahn weniger hoch ist, als die anderen beiden Zähne. Optional ist der Zahn mit der zweiten, geringeren Höhe in axialer Richtung unmittelbar vor dem Kolben angeordnet. Bevorzugt sind zwei Zähne mit der ersten, größeren Höhe mit Abstand auf beiden Seiten des Zahns mit der zweiten Höhe angeordnet. Bevorzugt weist die Kraftverteilungseinrichtung eine Markierung auf, mittels der sie wie zuvor beschrieben, relativ zu der Betätigungsanordnung, insbesondere zu dem Kolben, richtig positioniert werden kann.

Durch die räumliche und funktionale Zuordnung der Zähne zu dem jeweiligen Kolben kann die Betätigungskraft in vorteilhafter Weise verteilt und harmonisiert werden, wobei sie in Abhängigkeit des Drucks der hydraulischen Druckbeaufschlagung auf die beiden Zähne oder auf alle drei Zähne verteilt werden kann. Insbesondere wird die Betätigungskraft auf die drei Zähne verteilt und somit harmonisiert, wenn die hydraulische Druckbeaufschlagung der Kolben den Grenzdruck überschreitet.

In einer bevorzugten Ausführungsform der Erfindung weist die Kraftverteilungseinrichtung Zentrierabschnitte auf, mittels denen die Kraftverteilungseinrichtung relativ zu dem Ringgehäuse konzentrisch angeordnet werden kann. Vorzugsweise sind die Zentrierabschnitte in Umlaufrichtung beabstandet voneinander an dem Kraftverteilerring angeordnet, wobei sie radial von dieser abstehen. Beispielsweise sind die Zentrierabschnitte als Verzahnungsbereiche zum Eingriff in korrespondierende Verzahnungen eines Gehäuses der Bremsanordnung und/oder eines Getriebes ausgebildet. Insbesondere umgibt das Gehäuse den Nassraum oder es ist in dem Nassraum angeordnet.

Eine Bremsvorrichtung für ein Fahrzeug mit dem Mehrkolbenausrücksystem nach der bisherigen Beschreibung und/oder nach einem der Ansprüche 1 bis 9 bildet einen weiteren Gegenstand der Erfindung. Die Bremsvorrichtung umfasst eine Bremseinrichtung zur Erzeugung einer Bremskraft. Vorzugsweise ist die Bremseinrichtung nach der bisherigen Beschreibung ausgebildet. Insbesondere umfasst die Bremseinrichtung das Lamellenpaket, welches bevorzugt koaxial und/oder konzentrisch zu der Hauptachse angeordnet ist. Bei den Reiblamellen des Lamellenpakets handelt es sich um Innenlamellen, welche z.B. rotierbar angeordnet sind, und um Außenlamellen, welche z.B. rotationsfest angeordnet sind. Bevorzugt sind die Innenlamellen von einem z.B. rotierbaren Innenlamellenträger getragen. Vorzugsweise sind die Reiblamellen in der axialen Richtung und in der axialen Gegenrichtung bewegbar, insbesondere gegeneinander verschiebbar, angeordnet und/oder ausgebildet.

In einer bevorzugten Ausführungsform der Erfindung ist die Kraftverteilungseinrichtung, wenn sie in der Kontaktstellung angeordnet ist, in Abhängigkeit eines Drucks der hydraulischen Druckbeaufschlagung der Kolben in einigen oder allen Krafteinleitungsbereichen kontaktierend mit der Bremseinrichtung angeordnet. Vorzugsweise kontaktieren zwei Krafteileitungsbereiche, insbesondere die beiden Zähne mit der ersten, größeren Höhe die Bremseinrichtung, wenn die hydraulische Druckbeaufschlagung der Kolben mit einem Druck bis zum Erreichen des Grenzdrucks erfolgt. In diesem Fall wird die Betätigungskraft auf die beiden Zähne mit ersten Höhe verteilt und auf die Bremseinrichtung übertragen. Wenn der Grenzdruck bei der hydraulischen Druckbeaufschlagung der Kolben überschritten wird, rücken die Kolben weiter aus und drücken stärker gegen die Kraftverteilungseinrichtung. Dies hat zur Folge, dass zusätzlich auch der Zahn mit der zweiten, geringeren Höhe die Bremseinrichtung kontaktiert. Die Betätigungskraft wird in diesem Fall auf die drei Zähne je Betätigungsanordnung verteilt und auf die Bremseinrichtung übertragen.

Optional bildet eine Getriebeanordnung einen weiteren Gegenstand der Erfindung. Vorzugsweise weist die Getriebeanordnung ein Getriebegehäuse, ein Getriebe, z.B. ein Planentengetriebe, und die Bremsvorrichtung nach der bisherigen Beschreibung und/oder nach dem Anspruch 10 auf. Bevorzugt sind das Getriebe und die Bremsvorrichtung in dem Getriebegehäuse aufgenommen. Vorzugsweise ist die Bremsvorrichtung, insbesondere die Bremseinrichtung, so in dem Getriebegehäuse angeordnet, dass sie das Getriebe auf die Hauptachse bezogen radial umgreift.

In einer möglichen Ausführungsform der Erfindung weisen die Außenlamellen eine Außenverzahnung auf, mit der sie formschlüssig in eine passende Verzahnung in dem Getriebegehäuse eingreifen, sodass sie gegen eine Rotation gesichert sind und sodass sie in der axialen Richtung und in der axialen Gegenrichtung bewegbar sind. Vorzugsweise weisen die Innenlamellen eine Innenverzahnung auf, mit der sie mit einer passenden Verzahnung mindestens einer Komponente des Getriebes kämmen können.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Draufsicht in eine axiale Richtung auf ein Mehrkolbenausrücksystem zur Betätigung einer Bremseinrichtung eines Fahrzeugs mit mehreren hydraulischen Betätigungsanordnungen;
- Figur 2: eine perspektivische Draufsicht in eine axiale Gegenrichtung auf das Mehrkolbenausrücksystem;
- Figur 3: einen Schnitt durch einen Gehäuseabschnitt eines Ringgehäuses des Mehrkolbenausrücksystems und durch eine Betätigungsanordnung des Mehrkolbenausrücksystems;
- Figur 4: ein Hauptgehäuse des Ringgehäuses des Mehrkolbenausrücksystems;
- Figur 5: einen perspektivischen Querschnitt des Ringgehäuses durch den Gehäuseabschnitt und durch die Betätigungsanordnung;
- Figur 6: einen Querschnitt des Ringgehäuses durch den Gehäuseabschnitt und durch die Betätigungsanordnung.

Einander entsprechende oder gleiche Teile sind in den Figuren jeweils mit den gleichen Bezugszeichen versehen.

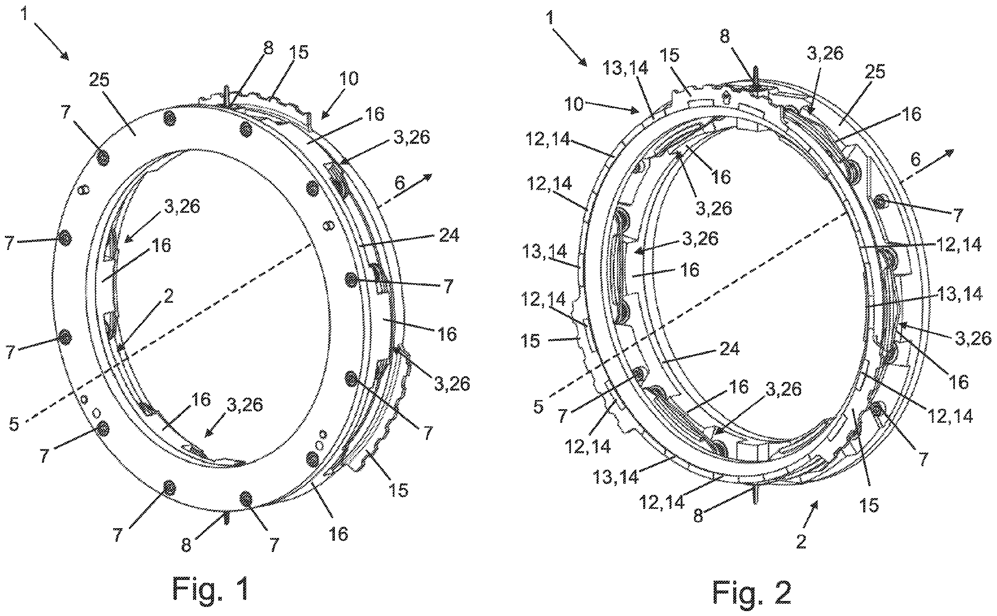

In der Figur 1 ist eine perspektivische Draufsicht in einer axialen Richtung 6 auf ein Mehrkolbenausrücksystem 1 gezeigt. Die Figur 2 zeigt eine perspektivische Draufsicht des Mehrkolbenausrücksystems 1 in einer axialen Gegenrichtung.

Das Mehrkolbenausrücksystem 1 kann einen Bestandteil einer Bremsvorrichtung für eine Getriebeanordnung bilden. Die Bremsvorrichtung umfasst eine Bremseinrichtung, welche als eine nasslaufende Reiblamellenbremse mit einem Lamellenpaket, das eine Mehrzahl an Reiblamellen umfasst, ausgebildet ist. Das Mehrkolbenausrücksystem 1 ist als eine Aktivatoreinrichtung für die Bremseinrichtung ausgebildet. Sie kann die Bremseinrichtung durch Übertragung einer Betätigungskraft zur Erzeugung einer Bremskraft aktivieren.

Die Bremsvorrichtung kann einen Bestandteil einer Getriebeanordnung mit einem Getriebegehäuse, das mit einem Nassraumfluid befüllt ist, und mit einem Getriebe, insbesondere mit Planetengetriebe, bilden. Sie kann gemeinsam mit dem Getriebe in dem Getriebegehäuse angeordnet sein und dort mittels der Bremskraft mindestens einer Komponente des Getriebes abbremsen. Das Getriebe und die Bremsvorrichtung können bezogen auf eine Hauptachse 5 des Mehrkolbenausrücksystems 1 konzentrisch und/oder koaxial zueinander angeordnet sein, wobei die Bremsvorrichtung das Getriebe radial umgibt.

Das Mehrkolbenausrücksystem 1 umfasst ein Ringgehäuse 2. Das Ringgehäuse 2 weist die Hauptachse 5 auf, welche die axiale Richtung 6 definiert. Das Ringgehäuse 2 ist in der axialen Richtung 6 zweiteilig ausgebildet. Es ist durch ein Hauptgehäuse 24 und durch einen Gehäusedeckel 25 gebildet. Das Hauptgehäuse 24 und der Gehäusedeckel 25 sind in axialer Richtung 6 aufeinander angeordnet und miteinander mittels einer Vielzahl an Gehäuseschrauben 7 verschraubt.

Das Hauptgehäuse 24 weist mehrere, zum Beispiel sechs, Gehäuseabschnitte 16 auf. Die Gehäuseabschnitte 16 sind in Umlaufrichtung des Hauptgehäuses 24 um die Hauptachse 5 in regelmäßigen Abständen zueinander angeordnet.

Das Mehrkolbenausrücksystem 1 weist mehrere, zum Beispiel sechs, hydraulische Betätigungsanordnungen 3 auf. Jeweils eine Betätigungsanordnung 3 ist genau einem Gehäuseabschnitt 16 zugeordnet und abschnittsweise in diesem aufgenommen.

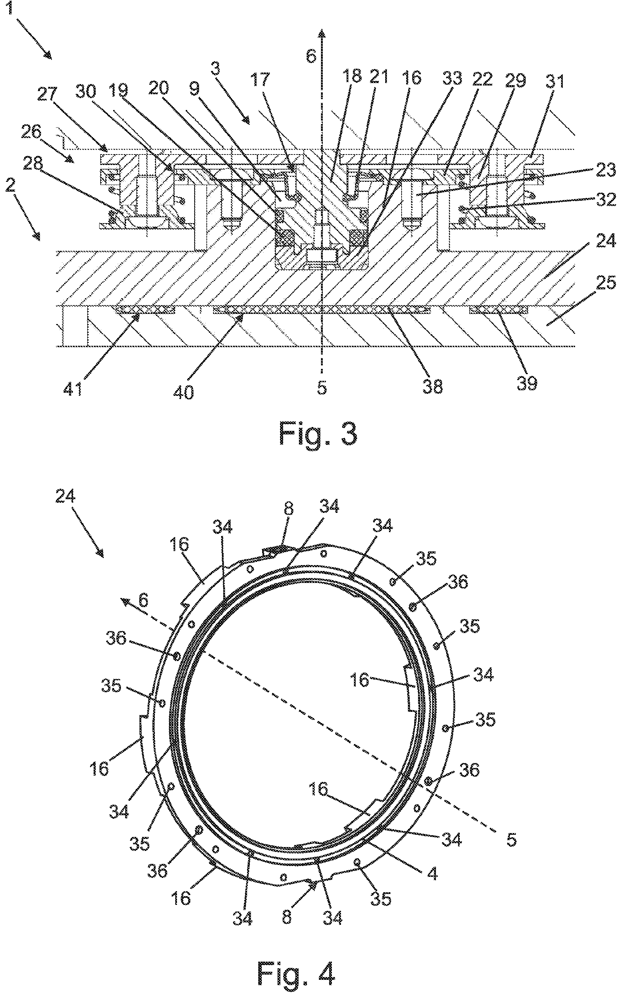

Das Hauptgehäuse 24 weist mehrere Druckräume 9 (siehe Figur 3) auf. Jeweils ein Druckraum 9 ist in einem der Gehäuseabschnitte 16 ausgebildet und ist der jeweiligen Betätigungsanordnung 3 zugeordnet. Die Druckräume 9 sind untereinander strömungstechnisch durch einen Strömungskanal 4 (siehe Figuren 4 bis 6) verbunden, sodass sie mit einem Fluid, insbesondere einer Hydraulikflüssigkeit, welche unterschiedlich zu dem Fluid des Nassraums ist, gefüllt werden können.

In der Figur 3 ist eine Schnittansicht durch das Ringgehäuse 2 mit dem Hauptgehäuse 24 und mit dem Gehäusedeckel 25 gezeigt, wobei eine Schnittlinie durch einen Gehäuseabschnitt 16 und durch eine dem Gehäuseabschnitt 16 zugeordnete Betätigungsanordnung 3 verläuft.

Die Betätigungsanordnung 1 umfasst eine Kolbenbaugruppe 17. Die Kolbenbaugruppe 17 weist einen Kolben 18 auf. Mit dem Kolben 18 ist ein Führungskörper 33 verschraubt. Der Kolben 18 und der Führungskörper 33 sind gemeinsam in dem Druckraum 9 axial beweglich angeordnet. Bei der axialen Bewegung führt der Führungskörper 33 den Kolben 18.

Die Betätigungsanordnung 1 umfasst eine erste Dichtungseinrichtung 19, eine zweite Dichtungseinrichtung 2 und eine dritte Dichtungseinrichtung 21. Die erste Dichtungseinrichtung 19 und die zweite Dichtungseinrichtung 20 sind als O-Ringe ausgebildet und an dem Kolben 18 bewegungsfest angeordnet. Sie dichten den Kolben 18 gegen den Druckraum 9 ab. Die erste Dichtungseinrichtung 19 fungiert zudem als ein Gleitband, welches das Gleiten des Kolbens 18 bei der axialen Bewegung erleichtert. Die dritte Dichtungseinrichtung 21 ist eine axial-translatorische Dichtung, welche den Druckraum 9 gegenüber dem Nassraum in dem Getriebegehäuse abdichtet.

Die Betätigungsanordnung 3 umfasst eine Halteplatte 22, welche in axialer Richtung 6 an dem Gehäuseabschnitt 16 angeordnet und mit diesem mittels zweier Schrauben 23 verschraubt ist. Der Kolben 4 kann bei einer hydraulischen Druckbeaufschlagung mittels des in den Druckraum 9 eingeleiteten Fluids relativ zu dem Gehäuseabschnitt 16 und zu der daran befestigten Halteplatte 22 einen Betätigungshub ausführen. Durch den Betätigungshub wird der Kolben 18 in eine Betätigungsstellung überführt, in der die Bremseinrichtung betätigt ist.

Die Betätigungsanordnung 3 weist eine Federbaugruppe 26 auf. Die Federbaugruppe 26 umfasst ein Federblech 27 und zwei Federteller 28. Das Federblech 27 weist einen Flächenabschnitt 31 und zwei Achsabschnitte 29 auf, welche von dem Flächenabschnitt 31 in die axiale Gegenrichtung abstehen. Der Flächenabschnitt 31 ist in axialer Richtung 6 vor der Halteplatte 22 angeordnet, wobei er sich parallel zu dieser erstreckt. Die Halteplatte 22 weist zwei Ausnehmungen 30 auf, durch welchen die Achsabschnitte 29 in die axiale Gegenrichtung hindurchragen. Die Federteller 28 sind behälterförmig ausgebildet und endseitig an den Achsabschnitten 29 durch eine Verschraubung befestigt.

Die Federbaugruppe 26 weist zwei Spiralfedern 32 auf. Die Spiralfedern 32 sind an den Achsabschnitten 29 zwischen der Halteplatte 22 und den Federtellern 28 angeordnet. Mit einem axialen Ende stützen sich die Spiralfedern 32 an der Halteplatte 22 ab und mit dem anderen Ende an dem Federteller 28 ab.

Der Kolben 18 ist form- und/oder kraftschlüssig mit dem Flächenabschnitt 31 des Federblechs 27 verbunden. Bei dem Betätigungshub des Kolbens 18 wird das Federblech 27 gemeinsam mit den Federtellern 28 entgegen einer Vorlast der Spiralfedern 32 in die axiale Richtung 6 bewegt. Die Spiralfedern 32 fungieren als Rückstelleinrichtungen, welche den Kolben 18 bei Nachlassen der hydraulischen Druckbeaufschlagung in die axiale Gegenrichtung zurückstellen.

Die Figur 4 zeigt das Hauptgehäuse 24 des Ringgehäuses 2 in einer perspektivischen Draufsicht in die axiale Richtung 6. Das Hauptgehäuse 24 weist den Strömungskanal 4 auf, mittels dem die Druckräume 9 in den Gehäuseabschnitten 16 strömungstechnisch verbunden sind. Der Strömungskanal 4 ist als ein einteiliger, geschlossener Ring ausgebildet, der koaxial und/oder konzentrisch zu der Hauptachse 5 angeordnet ist. Der Strömungskanal 4 ist in einer Trennebene zwischen dem Hauptgehäuse 24 und dem Gehäusedeckel 25 (siehe Figur 3) in dem Hauptgehäuse 24 durch spanende Bearbeitung eingebracht. Aufgrund der Anordnung des Strömungskanals 4 in der Trennebene kann dieser einfach und kostengünstig gefertigt werden.

Das Hauptgehäuse 24 weist zwei Fluideinlässe 8 auf, durch die das Fluid in den Strömungskanal 4 eingeleitet oder abgelassen werden kann und durch die der Strömungskanal 4 und die Druckräume 9 entlüftet werden können.

Das Hauptgehäuse 24 weist mehrere, z.B. sechs, Axialbohrungen 34 auf, welche durch den Strömungskanal 4 verlaufen. Die Axialbohrungen 34 münden in den Druckräumen 9 der jeweiligen Gehäuseabschnitte 16 und in den Fluideinlässen 8. Die Druckräume 9 und die Fluideinlässe 8 sind strömungstechnisch über die Axialbohrungen 34 mit dem Strömungskanal 4 verbunden. Das Hauptgehäuse 24 weist radial außerhalb des Strömungskanals 4 weitere Bohrungen 35 für die Gehäuseschrauben 7 (siehe Figuren 1 und 2) und zusätzliche Bohrungen 36 zur Befestigung an dem Getriebegehäuse auf, wenn das Mehrkolbenausrücksystem 1 in der Bremsvorrichtung integriert ist.

Bezugnehmend auf die Figur 3 weist das Mehrkolbenausrücksystem 1 mindestens eine Kanalabdichtung 37 zur Abdichtung des Strömungskanals 4 auf. Die mindestens eine Kanalabdichtung 37 ist durch einen ersten O-Ring 38 und einen zweiten O-Ring 39 gebildet. Der Gehäusedeckel 25 weist eine innere Ringnut 40 und eine äußere Ringnut 41 auf, wobei die innere Ringnut 40 radial innerhalb der äußeren Ringnut 41 angeordnet ist. Der erste O-Ring 38 ist in der inneren Ringnut 40 angeordnet und der zweite O-Ring 39 ist in der äußeren Ringnut 41 angeordnet.

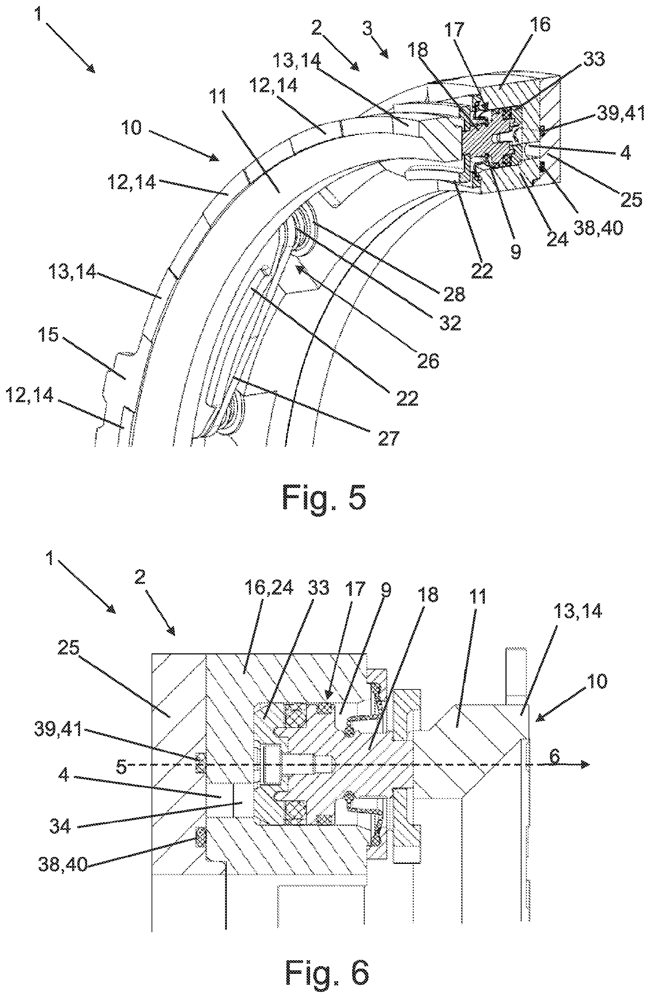

Die Figur 5 zeigt einen perspektivischen Querschnitt des Ringgehäuses 2 durch den Druckraum 9 des Gehäuseabschnitts 16 und durch die zugeordnete Betätigungsanordnung 3. In der Figur 6 ist ein Querschnitt des Ringgehäuses 2 durch den Gehäuseabschnitt 16 und die Kolbenbaugruppe 17 gezeigt.

Der Strömungskanal 4 ist radial zwischen der inneren Ringnut 40 und dem darin angeordneten ersten O-Ring 38 und der äußeren Ringnut 41 und dem darin angeordneten zweiten O-Ring 39 angeordnet. Durch den mit dem Hauptgehäuse 24 verschraubten Gehäusedeckel 25 sind die O-Ring 38, 39 in ihrer dichtenden Position gesichert. Das Fluid in dem Strömungskanal 4 kann dadurch nicht aus diesem entweichen. Der hydraulische Druck in den Druckräumen 9 zur Druckbeaufschlagung der Kolben 18 kann aufrechterhalten werden.

Bezugnehmend auf die Figuren 1, 2, 5 und 6 umfasst das Mehrkolbenausrücksystem 1 eine Kraftverteilungseinrichtung 10, mittels der eine Betätigungskraft der Kolben 18 des Mehrkolbenausrücksystems 1 in Abhängigkeit des hydraulischen Drucks aufgeteilt und somit harmonisiert werden kann.

Die Kraftverteilungseinrichtung 10 ist in axialer Richtung 6 unmittelbar vor den Kolben 18 angeordnet. Sie umfasst einen Kraftverteilerring 11 und mehrere daran angeordnete Krafteinleitungsbereiche 14. Der Kraftverteilerring 11 ist bezogen auf die Hauptachse 5 konzentrisch und/oder koaxial zu dem Ringgehäuse 2 angeordnet. Eine Anzahl der Krafteinleitungsbereiche 14 ist ein Vielfaches der Anzahl der in dem Mehrkolbenausrücksystem 1 vorhandenen Kolben 18. Bei dem Betätigungshub der Kolben 18 drücken diese gegen den Kraftverteilerring 11, sodass die Kraftverteilungseinrichtung 10 gemeinsam mit den Kolben 18 in die axiale Richtung 6 bewegt wird und den Betätigungshub ausführt.

Wenn das Mehrkolbenausrücksystem 1 in der Bremsvorrichtung integriert ist, können die Krafteinleitungsbereiche 14 in einer Kontaktstellung der Kraftverteilungseinrichtung 10 gegen das Lamellenpaket der Bremseinrichtung pressen und dadurch die Betätigungskraft des Kolbens 18 in diese einleiten. Die Reiblamellen des Lamellenpakets werden durch die Einleitung der Betätigungskraft reibschlüssig aneinandergelegt, wodurch eine Bremskraft zum Abbremsen der mindestens einen Komponente des Getriebes erzeugt werden kann.

Die Krafteinleitungsbereiche 14 sind als Zähne 12 mit einer ersten Höhe und als Zähne 13 mit einer zweiten Höhe ausgebildet. Die erste Höhe ist größer als die zweite Höhe. Es sind mehrere, z.B. insgesamt sechs Zähne 13 mit der zweiten Höhe und mehrere, z.B. insgesamt zwölf Zähne 12 mit der ersten Höhe vorhanden. Die Zähne 12, 13 sind in Umlaufrichtung um die Hauptachse 5 beabstandet zueinander auf einer in die axiale Richtung 6 gerichteten Oberseite des Kraftverteilerrings 11 angeordnet und stehen von dieser ab.

Die Kraftverteilungseinrichtung 10 weist mehrere, z.B. drei Zentrierabschnitte 15 auf, mittels denen die Kraftverteilungseinrichtung 10 koaxial und/oder konzentrisch zu der Hauptachse 5 und/oder zu dem Ringgehäuse 2 angeordnet werden kann. Die Zentrierabschnitte 15 sind in Umlaufrichtung beabstandet voneinander an dem Kraftverteilerring 11 angeordnet und stehen von diesem radial ab. Die Zentrierabschnitte 15 sind als Verzahnungsbereiche ausgebildet, mittels denen die Kraftverteilungseinrichtung 10 in korrespondierende Verzahnungen des Getriebegehäuses eingreifen kann, wenn das Mehrkolbenbremssystem in der Bremsanordnung integriert ist und diese in dem Getriebegehäuse angeordnet ist. Bei dem Eingriff ist die Kraftverteilungseinrichtung 10 in die axiale Richtung 6 bewegbar und gegen eine Rotation um die Hauptachse 5 gesichert.

Der Kraftverteilerring 11 ist relativ zu dem Gehäusering 2 so angeordnet und ausgerichtet, dass jeder Kolbenbaugruppe 3 insgesamt drei Zähne 12, 13 zugeordnet sind. Im Detail sind jeder Kolbenbaugruppe 3 genau zwei Zähne 12 mit der ersten, größeren Höhe und genau ein Zahn 13 mit der zweiten, geringeren Höhe zugeordnet. Der Zahn 13 mit der zweiten Höhe ist in axialer Richtung 6 direkt vor dem Kolben 18 angeordnet. Die beiden anderen Zähne 12 mit der ersten Höhe sind mit Abstand neben dem Zahn 13 mit der zweiten Höhe angeordnet. An dem Kraftverteilerring 11 ist eine nicht gezeigte Markierung z.B. in Gestalt eines Pfeils angeordnet, die die Positionierung des Kraftverteilerrings 11 und der Zähne 12, 13 relativ zu dem Ringgehäuse 2 und den Kolbenbaugruppen 3, so wie sie zuvor beschrieben ist, erleichtert und sicherstellt.

Die Aufteilung der Betätigungskraft auf die Zähne 12, 13 als die Krafteinleitungsbereiche 14 ist abhängig von einer Höhe eines Drucks zur hydraulischen Druckbeaufschlagung des Kolbens 18. Bis zu einem definierten Grenzdruck werden nur die einer Betätigungsanordnung 3 zugeordneten beiden Zähne 12 mit der ersten, größeren Höhe gegen das Lamellenpaket gepresst, sodass diese die Betätigungskraft anteilig übertragen. Dadurch kann die durch den Kolben 18 übertragene Betätigungskraft auf die beiden Zähne 12 mit der ersten Höhe aufgeteilt werden. Wenn der Grenzdruck überschritten wird, wird der Kolben 18 weiter in die axiale Richtung 6 bewegt, sodass er stärker gegen die Kraftübertragungseinrichtung 10 drückt. Dadurch wird auch der der Betätigungsanordnung 3 zugeordnete Zahn 13 mit der zweiten, geringeren Höhe gegen das Lamellenpaket gepresst, sodass auch dieser die Betätigungskraft anteilig überträgt. In diesem Fall wird die durch den Kolben 18 übertragene Betätigungskraft auf alle drei Zähne 12, 13 aufgeteilt. Die Aufteilung und dadurch erzielte Harmonisierung der Betätigungskraft ist dahingehend von Vorteil, dass eine Fläche der Reiblamellen möglichst gleichmäßig mit der Betätigungskraft beaufschlagt werden kann und partielle Überlastungen von Belägen und Reibflächen der Reiblamellen und eine damit einhergehende Unterbelastung anderer Bereiche der Reiblamellen zu vermieden werden können.

### Bezugszeichenliste

- 1: Mehrkolbenausrücksystem
- 2: Ringgehäuse
- 3: Betätigungsanordnung
- 4: Strömungskanal
- 5: Hauptachse
- 6: axiale Richtung
- 7: Gehäuseschrauben
- 8: Fluideinlässe
- 9: Druckräume
- 10: Kraftverteilungseinrichtung
- 11: Kraftverteilerring
- 12: Zähne mit erster Höhe
- 13: Zähne mit zweiter Höhe
- 14: Krafteinleitungsbereiche
- 15: Zentrierabschnitte
- 16: Gehäuseabschnitt
- 17: Kolbenbaugruppe
- 18: Kolben
- 19: erste Dichtungseinrichtung
- 20: zweite Dichtungseinrichtung
- 21: dritte Dichtungseinrichtung
- 22: Halteplatte
- 23: Schrauben
- 24: Hauptgehäuse
- 25: Gehäusedeckel
- 26: Federbaugruppe
- 27: Federblech
- 28: Federteller
- 29: Achsabschnitte
- 30: Ausnehmungen
- 31: Flächenabschnitt
- 32: Spiralfeder
- 33: Führungskörper
- 34: Axialbohrungen
- 35: weitere Bohrungen
- 36: zusätzliche Bohrungen
- 37: Kanalabdichtung
- 38: erster O-Ring
- 39: zweiter O-Ring
- 40: innerer Ringnut
- 41: äußere Ringnut

## Patentansprüche

1. Mehrkolbenausrücksystem (1) für eine Bremsvorrichtung eines Fahrzeugs,
mit einem Ringgehäuse (2), wobei das Ringgehäuse (2) eine Hauptachse (5) aufweist, wobei die Hauptachse (5) eine axiale Richtung (6) definiert,
wobei das Ringgehäuse (2) mehrere Gehäuseabschnitte (16), mehrere mit einem Fluid befüllbare und/oder befüllte Druckräume (9) und einen Strömungskanal (4) aufweist, wobei in jedem Gehäuseabschnitt (16) ein Druckraum (9) angeordnet ist, wobei die Druckräume (9) mittels des Strömungskanals (4) untereinander strömungstechnisch verbunden sind,
mit mehreren hydraulischen Betätigungsanordnungen (1), wobei jeder Betätigungsanordnung (1) ein Gehäuseabschnitt (16) zugeordnet ist,
wobei jede Betätigungsanordnung (3) eine Kolbenbaugruppe (17) mit einem Kolben (18) aufweist, wobei der Kolben (18) in dem Druckraum (9) in die axiale Richtung (6) beweglich angeordnet ist und bei einer hydraulischen Druckbeaufschlagung einen Betätigungshub zur Einleitung einer Betätigungskraft in die Bremseinrichtung ausführen kann,
wobei das Ringgehäuse (2) in axialer Richtung (6) zweiteilig mit einem Hauptgehäuse (24) und mit einem Gehäusedeckel (25) ausgebildet ist und
**dadurch gekennzeichnet, dass** die Betätigungsanordnungen (1) in Umlaufrichtung um das Ringgehäuse (2) in regelmäßigen Abständen beabstandet voneinander angeordnet sind.

2. Mehrkolbenausrücksystem (1) nach Anspruch 1, **dadurch gekennzeichnet, dass** die Gehäuseabschnitte (16) und der Strömungskanal (4) in oder an dem Hauptgehäuse (24) angeordnet sind.

3. Mehrkolbenausrücksystem (1) nach Anspruch 1 oder 2, **dadurch gekennzeichnet, dass** der Strömungskanal (4) in einer Trennebene des Hauptgehäuses (24) und des Gehäusedeckels (25) angeordnet ist.

4. Mehrkolbenausrücksystem (1) nach einem der vorhergehenden Ansprüche, **dadurch gekennzeichnet, dass** der Strömungskanal (4) ringförmig ausgebildet ist und konzentrisch und/oder koaxial zu der Hauptachse (5) angeordnet ist.

5. Mehrkolbenausrücksystem (1) nach einem der vorhergehenden Ansprüche, **dadurch gekennzeichnet, dass** das Hauptgehäuse (24) mehrere Axialbohrungen (34) aufweist, wobei die Axialbohrungen (34) den Strömungskanal (4) strömungstechnisch mit den Druckräumen (9) verbinden.

6. Mehrkolbenausrücksystem (1) nach einem der vorhergehenden Ansprüche, **dadurch gekennzeichnet, dass** das Mehrkolbenausrücksystem (1) mindestens eine Kanalabdichtung (37) zur Abdichtung des Strömungskanals (4) aufweist, wobei die mindestens eine Kanalabdichtung (37) mindestens ein O-Ring (38, 39) oder mindestens ein Dichtungsblech ist.

7. Mehrkolbenausrücksystem (1) nach Anspruch 6, **dadurch gekennzeichnet, dass** das Hauptgehäuse (24) oder der Gehäusedeckel (25) mindestens eine zu der Hauptachse (5) konzentrische und/oder koaxiale Ringnut (40, 41) aufweist, wobei der mindestens eine O-Ring (39, 39) in der mindestens einen Ringnut (40, 41) angeordnet ist.

8. Mehrkolbenausrücksystem (1) nach Anspruch 6 oder 7, **dadurch gekennzeichnet, dass** das mindestens eine Dichtungsblech zwischen dem Hauptgehäuse (24) und dem Gehäusedeckel (25) angeordnet ist.

9. Mehrkolbenausrücksystem (1) nach einem der vorhergehenden Ansprüche, **dadurch gekennzeichnet, dass** das Hauptgehäuse (24) und der Gehäusedeckel (25) form- und/oder kraftschlüssig miteinander verbunden sind.

10. Bremsvorrichtung für eine Getriebeanordnung eines Fahrzeugs mit einer Bremseinrichtung und mit dem Mehrkolbenausrücksystem (1) nach einem der vorhergehenden Ansprüche, wobei das Mehrkolbenausrücksystem (1) eine Aktivatoreinrichtung zur Betätigung der Bremseinrichtung bildet.

## Claims

1. A multi-piston disengagement system (1) for a braking device of a motor vehicle, having an annular housing (2), wherein the annular housing (2) has a main axis (5), wherein the main axis (5) defines an axial direction (6),
wherein the annular housing (2) has a plurality of housing sections (16), a plurality of pressure chambers (9) which can be filled and/or are filled with a fluid, and a flow channel (4), wherein a pressure chamber (9) is arranged in each housing section (16), wherein the pressure chambers (9) are fluidically connected to one another by means of the flow channel (4),
having a plurality of hydraulic actuating arrangements (1), wherein each actuating arrangement (1) is assigned a housing section (16),
wherein each actuating arrangement (3) has a piston assembly (17) with a piston (18), wherein the piston (18) is movably arranged in the pressure chamber (9) in the axial direction (6) and can perform an actuating stroke for the introduction of an actuating force into the braking device when hydraulic pressure is applied,
wherein the annular housing (2) is formed in two parts in the axial direction (6) with a main housing (24) and with a housing cover (25) and **characterized in that** the actuating arrangements (3) are arranged at regular distances from one another in the direction of rotation around the annular housing (2).

2. The multi-piston disengagement system (1) according to claim 1, **characterized in that** the housing sections (16) and the flow channel (4) are arranged in or on the main housing (24).

3. The multi-piston disengagement system (1) according to claim 1 or 2, **characterized in that** the flow channel (4) is arranged in a separating plane of the main housing (24) and the housing cover (25).

4. The multi-piston disengagement system (1) according to any one of the preceding claims, **characterized in that** the flow channel (4) is designed in an annular shape and is arranged concentrically and/or coaxially to the main axis (5).

5. The multi-piston disengagement system (1) according to any one of the preceding claims, **characterized in that** the main housing (24) has a plurality of axial bores (34), wherein the axial bores (34) fluidically connect the flow channel (4) to the pressure chambers (9).

6. The multi-piston disengagement system (1) according to any one of the preceding claims, **characterized in that** the multi-piston disengagement system (1) has at least one channel seal (37) for sealing the flow channel (4), wherein the at least one channel seal (37) is at least one O-ring (38, 39) or at least one sealing plate.

7. The multi-piston disengagement system (1) according to claim 6, **characterized in that** the main housing (24) or the housing cover (25) has at least one annular groove (40, 41) concentric and/or coaxial to the main axis (5), wherein the at least one O-ring (38, 39) is arranged in the at least one annular groove (40, 41).

8. The multi-piston disengagement system (1) according to claim 6 or 7, **characterized in that** the at least one sealing plate is arranged between the main housing (24) and the housing cover (25).

9. The multi-piston disengagement system (1) according to any one of the preceding claims, **characterized in that** the main housing (24) and the housing cover (25) are connected to one another in a form-fitting and/or force-fitting manner.

10. A braking device for a transmission assembly of a motor vehicle with a braking device and with the multi-piston disengagement system (1) according to any one of the preceding claims, wherein the multi-piston disengagement system (1) forms an activator device for actuating the braking device.

## Revendications

1. Système de débrayage à plusieurs pistons (1) de dispositif de freinage d'un véhicule automobile, comportant un carter annulaire (2), dans lequel le carter annulaire (2) présente un axe principal (5), l'axe principal (5) définissant une direction axiale (6),
dans lequel le carter annulaire (2) présente plusieurs sections de carter (16), plusieurs chambres de pression (9) qui peuvent être remplies d'un fluide et/ou qui sont remplies d'un fluide et un canal d'écoulement (4), dans lequel une chambre de pression (9) est agencée dans chaque section de carter (16), dans lequel les chambres de pression (9) sont reliées entre elles selon la technique de l'écoulement par le biais du canal d'écoulement (4),
comportant plusieurs agencements d'actionnement (1) hydrauliques, chaque agencement d'actionnement (1) étant associé à une section de carter (16),
dans lequel chaque agencement d'actionnement (1) présente un ensemble piston (17) comportant un piston (18), le piston (18) étant agencé de manière mobile dans la chambre de pression (9) dans la direction axiale (6) et, lorsqu'il est mis sous pression hydraulique, peut exécuter une course d'actionnement pour introduire une force d'actionnement dans le dispositif de freinage,
dans lequel le carter annulaire (2) est formé dans la direction axiale (6) en deux parties avec un carter principal (24) et avec un couvercle de carter (25) et est **caractérisé en ce que** les agencements d'actionnement (3) sont agencés à intervalles réguliers les uns des autres dans la direction périphérique autour du carter annulaire (2).

2. Système de débrayage à plusieurs pistons (1) selon la revendication 1, **caractérisé en ce que** les sections de carter (16) et le canal d'écoulement (4) sont agencés dans ou sur le carter principal (24).

3. Système de débrayage à plusieurs pistons (1) selon la revendication 1 ou 2, **caractérisé en ce que** le canal d'écoulement (4) est agencé dans un plan de séparation du carter principal (24) et du couvercle de carter (25).

4. Système de débrayage à plusieurs pistons (1) selon l'une quelconque des revendications précédentes, **caractérisé en ce que** le canal d'écoulement (4) est réalisé sous forme annulaire et est agencé de manière concentrique et/ou coaxiale à l'axe principal (5).

5. Système de débrayage à plusieurs pistons (1) selon l'une quelconque des revendications précédentes, **caractérisé en ce que** le carter principal (24) présente plusieurs alésages axiaux (34), les alésages axiaux (34) reliant selon la technique de l'écoulement le canal d'écoulement (4) aux chambres de pression (9).

6. Système de débrayage à plusieurs pistons (1) selon l'une quelconque des revendications précédentes, **caractérisé en ce que** le système de débrayage à plusieurs pistons (1) présente au moins un joint de canal (37) pour sceller le canal d'écoulement (4), l'au moins un joint de canal (37) étant au moins un joint torique (38, 39) ou au moins une plaque d'étanchéité.

7. Système de débrayage à plusieurs pistons (1) selon la revendication 6, **caractérisé en ce que** le carter principal (24) ou le couvercle de carter (25) présente au moins une rainure annulaire (40, 41) concentrique et/ou coaxiale à l'axe principal (5), dans lequel l'au moins un joint torique (38, 39) est agencé dans l'au moins une rainure annulaire (40, 41).

8. Système de débrayage à plusieurs pistons (1) selon la revendication 6 ou 7, **caractérisé en ce que** l'au moins une plaque d'étanchéité est agencée entre le carter principal (24) et le couvercle de carter (25).

9. Système de débrayage à plusieurs pistons (1) selon l'une quelconque des revendications précédentes, **caractérisé en ce que** le carter principal (24) et le couvercle de carter (25) sont reliés l'un à l'autre par complémentarité de forme et/ou par ajustement forcé.

10. Dispositif de freinage d'ensemble de transmission d'un véhicule automobile comportant un dispositif de freinage et comportant le système de débrayage à plusieurs pistons (1) selon l'une quelconque des revendications précédentes, dans lequel le système de débrayage à plusieurs pistons (1) forme un système d'activation pour actionner le dispositif de freinage.
